# FASCICULE DE BREVET EUROPEEN

(11) **EP 0 925 039 B1**
(45) Date de publication et mention de la délivrance du brevet: **02.01.2002**
(21) Numéro de dépôt: 97935650.8
(22) Date de dépôt: 29.07.1997
(51) Int. Cl.: A61C 7/08

(54) **APPAREILS POUR TRAITEMENTS D'ORTHOPEDIE FONCTIONNELLE DENTO-FACIALE ET PARODONTOLOGIE**
KIEFERORTHOPÄDISCHE UND PARODONTOLOGISCHE VORRICHTUNGEN
BRACES FOR DENTIFACIAL FUNCTIONAL ORTHOPAEDIC AND PERIODONTAL TREATMENT

(30) Priorité: 30.07.1996 FR 9609837
(43) Date de publication de la demande: 30.06.1999
(73) Titulaire: Sodisapf, 34000 Montpellier (FR)
(72) Inventeur: MATHIEU, Rodrigue, F-34000 Montpellier (FR)
(74) Mandataire: Tilloy, Anne-Marie
(86) Numéro de dépôt international: FR9701416
(87) Numéro de publication internationale: WO9804207

(56) Documents cités:
- FR-A- 2 641 964
- GB-A- 2 279 876

## Description

La présente invention a pour objet des appareils médicaux pour traitements d'orthopédie dento-faciale fonctionnelle et parodontologie visant à corriger des troubles du fonctionnement des fonctions neuro-végétatives, plus spécialement des troubles du fonctionnement de :
- la respiration nasale,
- la mastication,
- la déglutition,
- la phonation,
et, par voie de conséquence, visant à corriger des anomalies de la forme de la bouche, c'est-à-dire des anomalies de la forme des bases osseuses buccales et des malpositions dentaires.

Afin de corriger la position des dents chez des patients, il est connu d'utiliser des appareils médicaux correcteurs, appelés «positionneurs orthodontiques», affectant en plan la forme d'un U et comportant au moins une augette supérieure ou inférieure mais normalement à la fois des augettes supérieure et inférieure, chaque augette comprenant une pluralité de dépressions pour recevoir, retenir et remettre dans une position estimée être idéale, les dents qui y sont retenues. Il existe différentes sortes de positionneurs orthodontiques, leur point commun résidant dans la présence d'emplacement précis pour les dents existantes et, dans certains cas, pour les dents définitives à venir (voir, par exemple, le brevet français n° 2329247): des mouvements des dents à l'intérieur de ces positionneurs orthodontiques ne sont donc pas autorisés.

On connaît également, par le brevet français n° 2641964, des appareils pour le traitement, en thérapeutique dento-faciale, désignés par le vocable «activateurs-gouttières».

Ces activateurs-gouttières sont constitués, d'une façon générale, d'une double gouttière (ou double augette), de forme semi-elliptique, séparées par une cloison (ou épaisseur) horizontale. A la différence des positionneurs orthodontiques précités, il n'est pas prévu de logements précis pour les dents à l'intérieur de la double gouttière. En effet, la surface intérieure des parois verticales ou inclinées de la double gouttière, que sont le bandeau vestibulaire (externe) et le bandeau lingual (interne), ainsi que la surface de la cloison horizontale, sont lisses.

L'idée de base, à l'origine des activateurs-gouttières décrits dans le brevet français n° 2641964 est la suivante : les déformations buccales et les malpositions dentaires qui les accompagnent sont dues à des troubles du fonctionnement des fonctions neuro-végétatives que sont la respiration nasale, la mastication, la déglutition et la phonation. Dans la majorité des cas traités, le port de ces activateurs-gouttières et les exercices qui accompagnent leur port diurne, permettent de corriger les quatre fonctions neuro-végétatives précitées et, par voie de conséquence, de corriger des anomalies de la forme des bases osseuses buccales et des malpositions dentaires.

Mais, les activateurs-gouttières décrits dans le brevet français n° 2641964 ne sont pas totalement satisfaisants. Ils présentent, en effet, les inconvénients qui suivent :
- dans certains cas, on a constaté, en cours de traitement, l'apparition d'une infra-clusion incisive (ou béance). En d'autres termes, un espace se crée dans le sens vertical, entre les incisives supérieures et inférieures. Cette infra-clusion serait due, notamment, à la position de la langue, associée à une déglutition atypique, de type infantile (interposition de la langue) entre les incisives au moment de la déglutition ;
- dans d'autres cas, l'expansion transversale recherchée et nécessaire pour placer toutes les dents n'est pas obtenue ;
- dans le cas de traitements de certains adultes, certaines anomalies de la forme des bases osseuses buccales n'ont pu être corrigées, comme :
   . une D.D.M. (Dysharmonie Dento-Maxillaire) importante correspondant à des dents de dimensions trop importantes par rapport à celles des maxillaires [(i.e. la mâchoire supérieure (maxillaire) et la mâchoire inférieure (mandibule)];
   . une anomalie de classe III, héréditaire (ou prognathisme) correspondant à une position avancée de la mandibule, souvent associée à un hypodéveloppement de la mâchoire supérieure.

Un objectif essentiel de l'invention est donc d'apporter un remède aux inconvénients susmentionnés des activateurs-gouttières décrits dans le brevet français n° 2641964. Egalement, un objectif important de l'invention est de proposer des nouveaux appareils correcteurs pour traitements d'orthopédie dento-faciale fonctionnelle, adaptés et efficaces pour traiter aussi bien les enfants possédant leurs incisives temporaires ou permanentes, les adolescents et les adultes, avec lesquels les risques de récidive ou d'apparition de nouvelles malpositions dentaires dans le cadre d'un usage normal de ces appareils sont minimisés.

A cet effet, la présente invention a pour objet de nouveaux appareils correcteurs pour traitement d'orthopédie dento-faciale fonctionnelle et parodontologie, en matériau synthétique ou naturel, souple et alimentaire, constitués, d'une façon générale, d'une double gouttière (ou augette), ces deux gouttières affectant extérieurement, en plan horizontal, la forme d'un U évasé, et étant séparées par une cloison épaisse sensiblement horizontale, la surface intérieure de ces deux gouttières, définies entre d'une part des parois latérales dont le bandeau vestibulaire (externe) et les bandeaux ou bourrelets lingual et palatin (internes) et, d'autre part, la cloison épaisse horizontale, étant lisse.

Les nouveaux appareils correcteurs pour traitement d'orthopédie dento-faciale fonctionnelle et parodontologie selon l'invention sont caractérisés en ce que :
(a) la partie de la gouttière destinée à recevoir les incisives inférieures a la forme d'un canal droit qui débouche, à ses deux extrémités, respectivement dans deux canaux dentaires destinés à recevoir respectivement une canine inférieure, deux prémolaires inférieures (correspondant à deux molaires de lait d'un enfant) et, éventuellement, au moins une molaire inférieure ;
(b) la longueur du canal droit est prévue suffisante pour que les quatre incisives inférieures aient la place nécessaire pour s'y installer ;
(c) la profondeur du canal droit est prévue pour englober complètement les incisives inférieures et, à cette fin, la hauteur des parois latérales linguale et vestibulaire délimitant le canal droit depuis la cloison épaisse horizontale est au moins égale à la hauteur des incisives jusqu'à leur collet.

Dans un souci de simplification, les appareils médicaux pour traitement d'orthopédie dento-faciale fonctionnelle et parodontologie de la présente invention seront désignés ci-après par l'expression «appareils correcteurs».

Dans le cadre de l'invention :
- l'expression «paroi (latérale) linguale» ou «bandeau lingual» ou «bourrelet lingual» désigne la partie des appareils correcteurs qui longe les dents inférieures du côté de la langue, aussi bien au niveau des incisives, de la canine, des prémolaires (ou prémolaires de lait dans le cas d'un enfant) et des molaires ;
- l'expression «paroi (latérale) palatine» ou «bandeau palatin» désigne la paroi interne des appareils correcteurs du côté des dents supérieures et du palais;
- l'expression «paroi (latérale) vestibulaire» ou «bandeau vestibulaire» désigne la paroi externe des appareils correcteurs située du côté des dents inférieures et supérieures ;
- le terme «souple», utilisé pour qualifier les appareils correcteurs selon l'invention, signifie que ces appareils ont un comportement élastique lors du port en bouche et des exercices de mastication effectués au cours du traitement. Du fait de ce comportement élastique, les appareils correcteurs selon l'invention sont toniques et procurent des stimulations des muscles faciaux et buccaux au cours des exercices de mastication.
- les valeurs chiffrées de l'épaisseur des parois latérales vestibulaire, linguale et palatine, données dans la suite de la description, sont prises sensiblement à mi-hauteur de ces parois.

Avantageusement, les appareils correcteurs selon la présente invention sont des appareils de formes et de tailles standardisées selon l'âge du patient et la (ou les) anomalies de forme à traiter. Ils sont préfabriqués dans un matériau naturel ou synthétique, conforme aux exigences requises par les normes française et européenne sur les matériaux plastiques destinés au contact alimentaire et suffisamment souple. En outre, avec le matériau choisi, un port en bouche doit être possible sans perte sensible d'efficacité ou détérioration de l'appareil correcteur soumis aux efforts de mastication pendant une durée raisonnable. A cet égard, les appareils correcteurs doivent être renouveler régulièrement, environ tous les deux à trois mois pour des raisons d'efficacité moindre suite à leur tonicité devenue insuffisante ainsi que pour des raisons d'hygiène. De préférence, les appareils correcteurs selon l'invention sont à base de caoutchouc souple, de préférence encore de caoutchouc souple vulcanisé pour en assurer une meilleure conservation en bouche.

Avantageusement encore, le matériau constitutif des appareils correcteurs de l'invention est parfumé comme des gommes à mâcher.

Une première caractéristique importante des appareils correcteurs selon la présente invention, réside dans le fait que la partie de la double gouttière recevant les incisives inférieures est un canal droit ou rectiligne, chaque extrémité de ce canal droit aboutissant dans un canal dentaire destiné à recevoir la canine inférieure, les deux prémolaires inférieures (ou les deux molaires de lait correspondantes) et, éventuellement, au moins une molaire inférieure. Dès lors, en coupe horizontale, le canal dentaire droit est représenté substantiellement par deux droites parallèles.

Au contraire, les activateurs-gouttières décrits dans le brevet français n° 2641964, ont une forme nettement arrondie au niveau des incisives inférieures, impliquant une courbure du canal recevant les incisives inférieures, telle que la distance séparant le milieu de l'arc, correspondant à l'intersection d'un plan horizontal avec la paroi latérale interne vestibulaire du canal de courbure limitée recevant les incisives inférieures, et le milieu du segment de droite passant par les extrémités de l'arc est au moins égale à 3 mm ou supérieure.

Le canal dentaire recevant les incisives inférieures est délimité par deux parois latérales lisses, de forme générale verticale ou inclinée, qui sont le bandeau vestibulaire inférieur et le bandeau (ou bourrelet) lingual.

La paroi latérale linguale interne du canal dentaire recevant les incisives inférieures est prolongée à ses deux extrémités par les parois latérales linguales internes des deux canaux dentaires destinés à recevoir la canine inférieure, les deux prémolaires inférieures (ou les deux molaires de lait correspondantes) et, éventuellement, au moins une molaire inférieure, de telle sorte que, en coupe horizontale, ces trois parois latérales forment un «U» aux branches évasées.

Avantageusement, la largeur du canal droit, dans sa partie supérieure (i.e. à proximité de la cloison épaisse sensiblement horizontale), est prévue sensiblement égale à l'épaisseur des incisives inférieures au niveau du collet, dans le sens sagittal (i.e. selon le plan de symétrie passant au milieu de ces incisives).

De même, la largeur du canal dentaire destiné à recevoir les incisives supérieures est avantageusement prévue, dans sa partie supérieure, sensiblement égale à l'épaisseur des incisives inférieures au niveau du collet, dans le sens sagittal.

Selon une seconde caractéristique importante de l'invention, la longueur du canal dentaire recevant les incisives inférieures est prévue suffisante pour que les quatre incisives inférieures aient la place nécessaire pour s'y installer :
- dans le cas d'un patient possédant ses incisives inférieures temporaires, c'est-à-dire entre environ 3 ans et jusqu'à environ 6 ans ou plus, la longueur de ce canal est de l'ordre de 20 mm ± 2 mm ;
- dans le cas d'un patient ayant perdu ses incisives inférieures temporaires et n'ayant pas encore ses incisives inférieures définitives, la longueur de ce canal est de l'ordre de 22 mm ± 2 mm ;
- dans le cas d'un patient ayant ses incisives inférieures définitives, c'est-à-dire généralement à partir d'environ 6 ans ou plus, la longueur de ce canal est de l'ordre de 24 mm ± 1 mm.

De même, le canal dentaire destiné à recevoir les incisives supérieures, qui est légèrement arrondi, est prévu de dimension suffisante pour que les incisives supérieures aient la place nécessaire pour s'y installer. Pour ce faire, la partie du canal dentaire destinée à recevoir les incisives supérieures est de préférence délimitée latéralement par une paroi vestibulaire, plutôt verticale et légèrement courbe, dans le sens transversal (de gauche à droite ou vice-versa), et une paroi palatine de forme générale arrondie dans le sens antéropostérieur (d'avant en arrière ou vice-versa) et légèrement courbe dans le sens transversal.

Selon une troisième caractéristique importante de l'invention, la profondeur du canal recevant les incisives inférieures, qui est droit, est telle que ce canal puisse englober les incisives inférieures, au moins jusqu'à leur collet, lors d'un port en bouche, les dents serrées. De préférence encore, la profondeur de ce canal à compter de la cloison horizontale épaisse n'excède pas la hauteur des incisives inférieures depuis leur bord tranchant jusqu'à leur collet. Egalement, la profondeur du canal dentaire destiné à recevoir les incisives supérieures est prévue suffisante pour lui permettre d'englober les incisives supérieures au moins jusqu'à leur collet, lors d'un port en bouche les dents serrées. De préférence encore, les dimensions du canal dentaire destiné à recevoir les incisives supérieures sont prévues pour permettre :
- d'englober l'arcade maxillaire supérieure jusqu'à la limite entre la gencive et la lèvre intérieure, sans prendre appui sur les muqueuses afin de ne pas les blesser ;
- d'exercer une légère pression au niveau du palais.

En cas de gêne importante ou de blessure lors d'un port en bouche, la hauteur de la paroi vestibulaire (inférieure et/ou supérieure) et/ou la hauteur de la paroi linguale et/ou la hauteur de la paroi palatine peuvent être diminuées.

Par ailleurs, la portion de la cloison épaisse horizontale où les incisives inférieures et supérieures prennent appui est prévue plane afin que les incisives prennent appui toutes en même temps sur la cloison épaisse horizontale et reçoivent chacune une stimulation équivalente.

Grâce au canal dentaire recevant les incisives inférieures, qui est droit (ou rectiligne) (caractéristique (a) de l'invention) et à ses dimensions adaptées aux incisives en place (caractéristiques (b) et (c) de l'invention, les incisives inférieures ne peuvent plus être arrondies ou vestibulées (i.e. incisives qui se penchent vers l'avant) : de fait, le nombre d'infra-clusions incisives constaté chez les patients jeunes a été considérablement diminué.

En outre, grâce à un tel canal dentaire, rectiligne au niveau des incisives inférieures, les nouveaux appareils correcteurs sont plus efficaces pour corriger les quatre fonctions neurovégétatives mentionnées précédemment. Ainsi, la présence d'un canal dentaire rectiligne au niveau des incisives inférieures, permet une meilleure correction de la position de la langue (donc de la déglutition) et, par conséquent, une meilleure correction des autres fonctions neuro-végétatives et une meilleure correction des anomalies de forme des bases osseuses buccales et des malpositions dentaires correspondantes.

Un autre avantage de l'invention réside dans la stabilité à long terme des corrections obtenues.

A l'exception de la longueur des canaux recevant les incisives supérieures et inférieures, les autres dimensions des appareils correcteurs selon la présente invention peuvent varier selon l'âge du patient à traiter, la dimension de la bouche du patient et la pathologie à traiter. On peut ainsi faire varier :
- la longueur et la profondeur des canaux dentaires recevant les canines, les prémolaires et, éventuellement, au moins une molaire ;
- les épaisseurs des parois vestibulaire, linguale et palatine, ces épaisseurs étant avantageusement au moins égales à 2 mm ; les épaisseurs les plus importantes sont atteintes par les parois linguale et palatine avec les appareils correcteurs visant une expansion transversale des maxillaires ;
- l'épaisseur de la cloison horizontale qui est de préférence plus importante au niveau des incisives que celle de cette même cloison horizontale au niveau des autres dents, ceci afin de bénéficier, à cet endroit, d'une tonicité plus grande et, ainsi, d'augmenter les pressions, donc les stimulations données aux incisives. Au niveau des incisives, l'épaisseur de la cloison horizontale est de préférence comprise entre 2 et 5 mm ;
- d'une manière générale, les dimensions extérieures des appareils correcteurs.

L'action principale des parois linguale, palatine et vestibulaire est de corriger une implantation inclinée en une implantation sensiblement verticale. Egalement, dans le cas d'appareils correcteurs pour expansion transversale, une seconde action majeure des parois linguale et palatine est de faire de la place et d'écarter les dents.

Avantageusement, la paroi linguale ou (bourrelet lingual), qui correspond à la partie de l'appareil qui longe les dents inférieures du côté de la langue aussi bien au niveau des incisives, de la canine, des prémolaires et des molaires, est prévue :
- suffisamment haute pour permettre le recouvrement des dents et de l'os alvéolaire en partie sans atteindre le frein de la langue ;
- suffisamment épaisse pour permettre, dans certains cas, l'expansion transversale nécessaire pour placer toutes les dents.

En outre, pour favoriser ou maintenir une implantation verticale des incisives inférieures, l'épaisseur de la paroi linguale est avantageusement plus importante au niveau des incisives inférieures qu'au niveau des autres dents inférieures. Généralement, l'épaisseur de la paroi linguale au niveau des incisives inférieures varie, selon l'âge du patient, entre 3 ± 1 mm et 7 ± 1 mm, tandis que l'épaisseur de la paroi linguale au niveau de molaires varie entre 2 ± 1 mm et 4 ± 1 mm. De même, l'épaisseur de la paroi palatine au niveau des incisives supérieures est supérieure à l'épaisseur de la paroi palatine au niveau des autres dents. Généralement, l'épaisseur de la paroi palatine au niveau des incisives supérieures varie, selon l'âge du patient, entre 4 ± 1 mm et 10 ± 1 mm ; tandis que l'épaisseur de la paroi palatine au niveau des molaires varie entre 3 ± 1 mm et 5 ± 1 mm.

Les appareils correcteurs selon la présente invention sont indiqués pour traiter des enfants (à partir d'environ 3 ans) dès qu'ils possèdent leurs incisives de lait ou définitives, des adolescents et des adultes (pouvant avoir plus de 50 ans). En revanche, les positionneurs de l'art antérieur ne peuvent généralement pas être envisagés avant la sortie des premières dents définitives, soit à partir d'environ 6 ans.

Les appareils correcteurs fonctionnels selon la présente invention permettent de traiter :
- chez les enfants, avant 10 ans environ, un grand nombre des anomalies de la forme des bases osseuses buccales et alvéolaires, en dehors des pathologies lourdes comme celles d'origine congénitale ou accidentelle. A titre d'exemple d'anomalies de la forme des bases osseuses buccales pouvant être traitées, on peut citer :
   . les D.D.M. (Dysharmonies Dento-Maxillaires) correspondant à des dents de dimensions trop importantes par rapport à celles des maxillaires [(i.e. la mâchoire supérieure (maxillaire) et la mâchoire inférieure (mandibule)]. Dans un tel cas, un appareil correcteur pour expansion transversale conforme à la présente invention est parfaitement indiquée ;
   . des anomalies de classe II correspondant à une position en retrait (vers l'arrière) de l'arcade inférieure ou mandibule relativement à l'arcade supérieure ou maxillaire ;
   . des anomalies de classe III (ou prognathisme) correspondant à une position avancée de la mandibule, souvent associée à un hypodéveloppement de la mâchoire supérieure.
- chez les adolescents et les adultes, un grand nombre des anomalies de la forme des bases osseuses alvéolaires, en dehors des prognathismes vraies (mâchoire inférieure très en avant) et des pathologies lourdes, comme celles d'origine congénitale ou accidentelle. A titre d'exemple d'anomalies de la forme des bases osseuses alvéolaires pouvant être traitées, on peut citer :
   . les D.D.M. (Dysharmonies Dento-Maxillaires) correspondant à des dents de dimensions trop importantes par rapport à celles des maxillaires. Dans un tel cas, un appareil correcteur pour expansion transversale conforme à la présente invention est parfaitement indiquée ;
   . des anomalies de classe II correspondant à une position en retrait (vers l'arrière) de l'arcade inférieure ou mandibule relativement à l'arcade supérieure ou maxillaire ;
   . des anomalies de classe III (ou prognathisme) correspondant à une position avancée de la mandibule, souvent associée à un hypodéveloppement de la mâchoire supérieure. Ces anomalies ne peuvent toutefois pas être complètement corrigées chez les adolescents et les adultes avec les appareils correcteurs selon l'invention.

Sauf exception rare, surtout si le traitement est entrepris tôt (environ avant l'âge de 10 ans), les appareils correcteurs selon l'invention permettent d'éviter l'extraction de dents définitives.

Les appareils correcteurs selon la présente invention sont en outre indiqués dans les cas de maladies du parodonte désignées sous le vocable «polymicrotraumatisme», pouvant entraîner le déchaussement et, ultérieurement, la mobilité des dents, sous réserve qu'un stade avancé de cette maladie ne soit pas atteint. Cette dégradation du parodonte ou polymicrotraumatisme se traduit tout d'abord par des dents mal ajustées, d'où une occlusion traumatisante des dents avec risque de lésions des dents et des tissus environnants. Dans un tel cas, les appareils correcteurs selon l'invention permettent de rétablir un bon équilibre de l'occlusion des dents si la dégradation du parodonte n'a pas atteint un stade avancé se traduisant par la mobilité des dents.

En outre, les appareils correcteurs selon la présente invention permettent généralement :
- la sortie de dents incluses (canines, prémolaires et dents de sagesse notamment) ;
- l'établissement d'une occlusion (contact entre les dents supérieures et inférieures) correcte et une bonne fonction maxillaire-mandibulaire, d'où une action thérapeutique sur les troubles de l'articulation temporo-mandibulaire et sur les troubles à distance en liaison avec les troubles du fonctionnement de cette articulation.

Comme dans le brevet français n° 2641964, on peut classer les appareils correcteurs selon l'invention en fonction de la position relative des arcades dentaires :
- dans le cas où les arcades dentaires maxillaire et mandibulaire sont disposées l'une par rapport à l'autre dans des rapports normaux dans le sens sagittal (ou antéro-postérieur), on préconise, dans le cadre de l'invention, un appareil correcteur dit conformateur selon la présente invention, destiné à agir, par exemple, sur les déplacements dentaires individuels, les proalvéolies (incisives inférieures ou supérieures en avant), les béances antérieures, les malpositions avec endoalvéolie (prémolaires et molaires inclinées à l'intérieur de la bouche) légère et supraclusion incisive, les déviations mandibulaires d'origine occlusale, musculaire ou neuro-musculaire, le bruxisme et/ou le ronflement ;
- dans le cas où l'arcade dentaire maxillaire est déplacée vers l'avant et l'arcade mandibulaire est déplacée vers l'arrière (anomalies de classe II dans le sens sagittal), on préconise, dans le cadre de l'invention, un appareil correcteur dit pour «rétromorphose», conforme à la présente invention, permettant de corriger les rapport anormaux des arcades entre elles ainsi que, éventuellement, d'autres anomalies de forme ;
- dans le cas où l'arcade dentaire maxillaire est déplacée vers l'arrière et l'arcade dentaire mandibulaire est déplacée vers l'avant (anomalies de classe III dans le sens sagittal), on préconise, dans le cadre de l'invention, un appareil correcteur dit pour «antémorphose» permettant de corriger les rapports anormaux des arcades dentaires entre elles, ainsi que, si nécessaire, d'autres anomalies de la forme de la bouche et du fonctionnement des fonctions neuro-végétatives.

A ces trois classes d'appareils correcteurs, il faut ajouter l'appareil correcteur pour expansion transversale dont l'action essentielle est l'élargissement des maxillaires, des alvéoles et des arcades dentaires pour corriger des D.D.M. (Dysharmonies Dento-Maxillaires) définies ci-avant.

Le traitement d'un patient pourra impliquer l'utilisation de l'un des appareils précités ou l'utilisation de plusieurs des appareils précités, successivement, en moyenne pendant trois à quatre années.

L'efficacité, à moyen et long termes, des appareils correcteurs dépend bien évidemment du patient à traiter, en particulier de sa volonté et de son respect des consignes données qui sont essentiellement :
- porter l'appareil correcteur fonctionnel la nuit pour dormir (après un temps d'adaptation de quelques jours, généralement d'une dizaine de jours environ) ;
- et, porter l'appareil correcteur fonctionnel durant de courtes périodes le jour, de préférence environ une heure par jour, de préférence encore en plusieurs périodes, avantageusement en trois périodes de l'ordre de 20 minutes chacune (après les repas si possible), et faire les exercices suivants :
   . le patient mastique, un certain nombre de fois, de préférence environ 12 fois dans son appareil au plus, en gardant les lèvres serrées (son appareil ne doit pas être visible) ;
   . puis, le patient doit avaler la salive (déglutition), lèvres toujours serrées. Selon une variante, en fonction de la pathologie à corriger, le patient doit avaler la salive une fois lèvres jointes, une fois lèvres entrouvertes, etc.);
   . à nouveau, un certain nombre de mastications, de préférence environ 12 mastications au plus, puis déglutition, etc.

La durée des exercices précités peut varier selon l'âge du patient.

Grâce à une pratique normale des exercices précitées avec les appareils correcteurs selon l'invention :
- des pressions dues aux parois vestibulaire, linguale et palatine s'exercent sur les incisives et permettent, si nécessaire, leur redressement en une position sensiblement verticale ;
- des pressions dues à la cloison épaisse horizontale s'exercent sur les incisives, stimulent les incisives et, par voie de conséquence, stimulent l'ensemble de la dentition, les muscles faciaux et buccaux, les maxillaires.

Parallèlement, grâce à une pratique normale des exercices précitées, les appareils correcteurs selon l'invention permettent, dans la majorité des cas, sous les réserves précitées, de corriger progressivement les quatre fonctions neuro-végétatives, qui sont interdépendantes fonctionnellement, et de potentialiser ainsi les résultats visés.

Ainsi, on parvient à corriger les troubles du fonctionnement des fonctions neuro-végétatives et les anomalies de la forme de la bouche qui en découlent.

Il est important de noter enfin que, outre les avantages précités, les appareils correcteurs selon l'invention présentent les avantages des activateurs gouttières décrits dans le brevet français n° 2641964 sans les inconvénients cités ci-avant.

L'invention va maintenant être illustrée au travers de trois exemples de réalisation particuliers de l'invention.

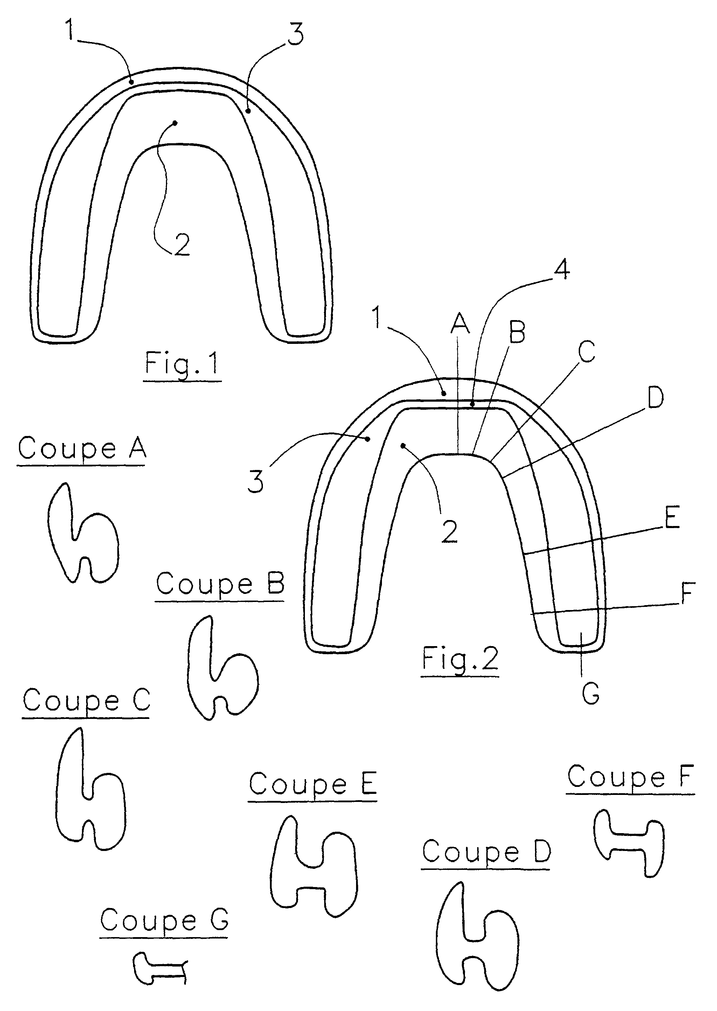

Sur la planche 1/3, dans les figures 1 et 2, sont représentées deux vues de dessus et de dessous d'un appareil correcteur pour expansion transversale destiné à un adulte, ces deux vues de dessus et de dessous, correspondant respectivement à la gouttière pour la mâchoire supérieure (figure 1) et à la gouttière pour la mâchoire inférieure (figure 2). Les gouttières supérieures et inférieures sont en outre précisées au moyen des coupes transversales A-G.

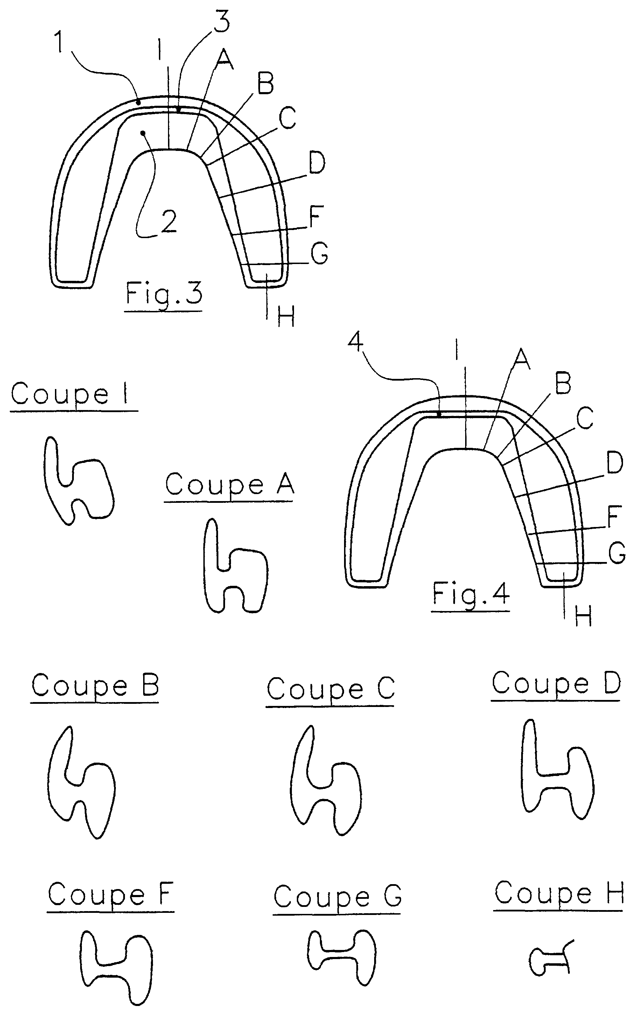

Sur la planche 2/3, dans les figures 3 et 4, sont représentées deux vues de dessus et de dessous d'un appareil correcteur pour expansion transversale, destiné à un enfant entre environ 6 ans et environ 12 ans, ces deux vues de dessus et de dessous correspondant respectivement à la gouttière pour la mâchoire supérieure (figure 3) et à la gouttière pour la mâchoire inférieure (figure 4). Les gouttières supérieure et inférieure sont en outre précisées au moyen des coupes transversales I-H.

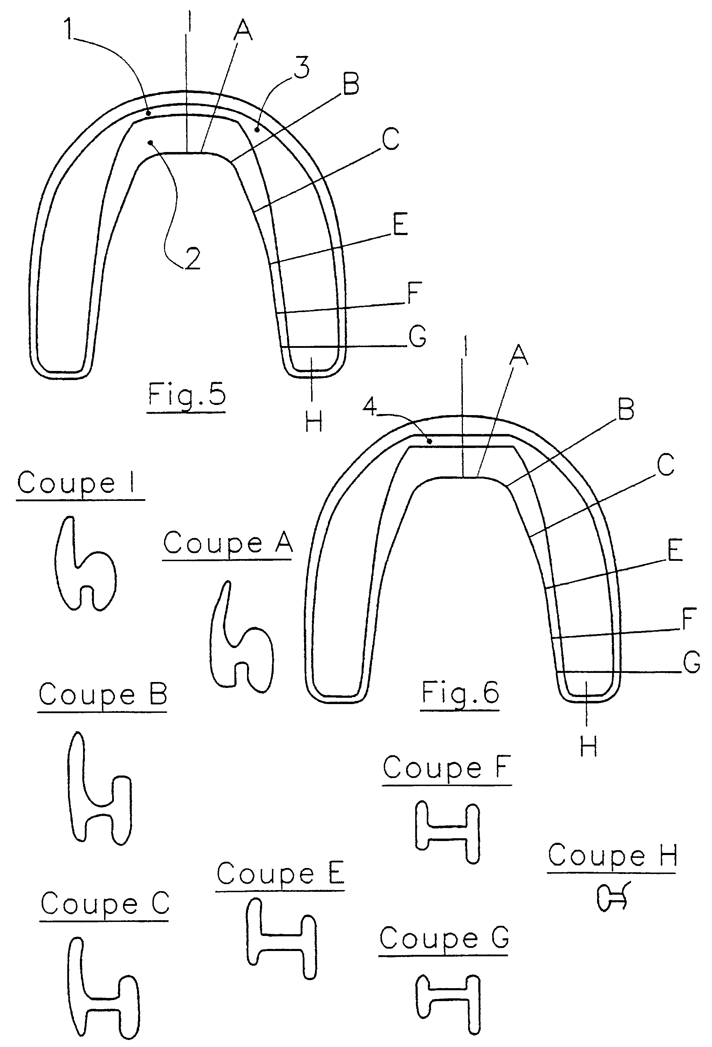

Sur la planche 3/3, dans les figures 5 et 6, sont représentées deux vues de dessus et de dessous d'un appareil correcteur conformateur, destiné à un adulte, ces deux vues de dessus et de dessous correspondant respectivement à la gouttière pour la mâchoire supérieure (figure 5) et à la gouttière pour la mâchoire inférieure (figure 6). Les gouttières supérieures et inférieures sont en outre précisées au moyen des coupes transversales I-H.

Comme on peut le voir sur les figures 1 et 2, l'appareil correcteur pour expansion transversale est constitué de deux bandeaux verticaux (1, 2), reliés par une cloison horizontale épaisse (3). Les coupes transversales A-G montrent la forme générale des gouttières supérieure et inférieure. Ces deux gouttières sont en outre dimensionnées pour englober les arcades maxillaire et mandibulaire jusqu'au collet. Le canal dentaire rectiligne (4), destiné à recevoir les incisives inférieures, a une longueur de 24 mm car cet appareil correcteur est destiné à un adulte.

L'action principale de l'appareil correcteur pour expansion transversale est la correction d'une D.D.M.

Comme tous les appareils correcteurs selon l'invention, l'appareil décrit sur la planche 1/3 est prévu pour libérer, inciter et guider les impulsions produites par le jeu musculaire. En outre, cet appareil est prévu pour augmenter les dimensions des bases osseuses au niveau des maxillaires et, si nécessaire, les dimensions alvéolaires. Egalement, cet appareil est prévu pour permettre la normalisation de l'implantation des dents, une bonne occlusion et un articulé dentaire correct et fonctionnel. A cet effet, par comparaison avec l'appareil correcteur conformateur montré sur les figures 5 et 6, cet appareil est caractérisé par :
- une épaisseur plus marquée du bandeau vestibulaire (de l'ordre de 4 mm au niveau des incisives inférieures et de l'ordre de 5 mm au niveau des incisives supérieures (voir les coupes A et B);
- une épaisseur beaucoup plus grande du bandeau lingual (interne) lequel est, de plus, plus prolongé vers le bas que dans l'appareil correcteur conformateur pour favoriser un élargissement de la mandibule;
- une largeur plus grande du couloir dentaire compris entre les deux bandeaux (lingual et vestibulaire) pour permettre le déplacement centrifuge des dents.

L'appareil correcteur, représenté sur les figures 3 et 4, vise également une expansion transversale mais chez un patient d'environ 6 à 12 ans. Cet appareil est constitué de deux bandeaux verticaux (1, 2), reliés par une cloison horizontale épaisse 3. Les coupes transversales I-H montrent la forme générale des gouttières supérieure et inférieure. Ces deux gouttières sont dimensionnées pour englober l'arcade mandibulaire jusqu'au collet et l'arcade maxillaire jusqu'au vestibule. Le canal dentaire rectiligne 4 destiné à recevoir les incisives inférieures, a une longueur de l'ordre de 24 mm si le patient possède ses incisives définitives ou une longueur inférieure (à cet égard, se reporter à la description de l'invention).

Cet appareil correcteur pour expansion transversale possède les mêmes caractéristiques que l'appareil représenté sur les figures 1 et 2, les seules différences résidant dans les dimensions extérieures de l'appareil et dans les épaisseurs de ces parois qui sont plus faibles pour permettre un port en bouche par un enfant de 6 à 12 ans.

Sur les figures 5 et 6, est représenté un appareil correcteur conformateur, généralement utilisé après un traitement à l'aide d'un appareil correcteur pour expansion transversale. Les appareils correcteurs conformateurs ont généralement pour fonction de stabiliser les corrections obtenues ou rétablir un bon équilibre occlusale dans le cas de dégradation du parodonte (ou polymicrotraumatisme), sous réserve que cette dégradation du parodonte n'ait pas atteint un stade trop avancé.

Cet appareil comprend, d'une manière générale, un bandeau vertical interne (lingual et palatin) et un bandeau vertical externe (vestibulaire), ces deux bandeaux étant reliés par un plan horizontal, i.e. la cloison horizontale épaisse.

Comme l'appareil décrit est destiné à un adulte, la longueur du canal dentaire rectiligne (4) destiné à recevoir les incisives inférieures, a une longueur de 24 mm.

Les deux gouttières de cet appareil sont dimensionnées pour englober :
- l'arcade maxillaire supérieure jusqu'à la limite entre la gencive et la lèvre intérieure, sans prendre appui sur les muqueuses pour éviter de les blesser ;
- l'arcade mandibulaire jusqu'au collet.

En outre, la paroi palatine va avantageusement au-delà du collet des dents afin d'exercer une légère pression au niveau du palais.

Bien entendu, l'invention n'est pas limitée aux deux familles d'appareils correcteurs décrits ci-dessus. Elle englobe également, notamment :
- les appareils correcteurs pour rétromorphose destinés à corriger les anomalies, de classe II, de la forme des bases osseuses buccales (mandibule en arrière par rapport au maxillaire) ;
- les appareils correcteurs fonctionnels pour antémorphose destinés à corriger les anomalies, de classe III, de la forme des bases osseuses buccales (mandibule en avant par rapport au maxillaire), souvent associé à un hypodéveloppement du maxillaire.

## Revendications

1. Appareils correcteurs pour traitement d'orthopédie dento-faciale fonctionnelle et parodontologie, en matériau naturel ou synthétique, souple et alimentaire, constitués, d'une façon générale, d'une double gouttière, ces deux gouttières affectant extérieurement, en plan horizontal, la forme d'un U évasé et étant séparées par une cloison épaisse sensiblement horizontale, la surface intérieure de ces deux gouttières, définies entre d'une part des parois latérales dont le bandeau vestibulaire (1) et les bandeaux (2) ou bourrelets lingual et palatin et, d'autre part, la cloison épaisse horizontale (3), étant lisse, ces appareils correcteurs étant **caractérisés en ce que** :
(a) la partie de la gouttière destinée à recevoir les incisives inférieures a la forme d'un canal droit (4) qui débouche, à ses deux extrémités, respectivement dans deux canaux dentaires destinés à recevoir respectivement une canine inférieure, deux prémolaires inférieures, ou les deux molaires de lait correspondantes d'un enfant et, éventuellement, au moins une molaire inférieure ;
(b) la longueur du canal droit (4) est prévue suffisante pour que les quatre incisives inférieures aient la place nécessaire pour s'y installer.
(c) la profondeur du canal droit (4) est prévue pour englober complètement les incisives inférieures et, à cette fin, la hauteur des parois latérales linguale (2) et vestibulaire (1) délimitant le canal droit (4) depuis la cloison épaisse horizontale (3) est au moins égale à la hauteur des incisives jusqu'à leur collet.

2. Appareils correcteurs selon la revendication 1 **caractérisés en ce qu'**ils sont à base de caoutchouc souple.

3. Appareils correcteurs selon la revendication 2 **caractérisés en ce qu'**ils sont à base de caoutchouc souple vulcanisé.

4. Appareils correcteurs selon l'une des revendications 1 à 3 **caractérisés en ce qu'**ils sont parfumés comme les gommes à mâcher.

5. Appareils correcteurs selon l'une des revendications précédentes **caractérisés en ce que** la largeur du canal (4) recevant les incisives inférieures, dans sa partie supérieure, est prévue sensiblement égale à l'épaisseur des incisives inférieures, dans le sens sagittal.

6. Appareils correcteurs selon l'une des revendications précédentes **caractérisés en ce que** la longueur du canal (4) destiné à recevoir les incisives inférieures est telle que :
- dans le cas d'un patient possédant ses incisives inférieures temporaires, c'est-à-dire entre environ 3 ans et jusqu'à environ 6 ans ou plus, la longueur de ce canal est de l'ordre de 20 mm ± 2 mm.
- dans le cas d'un patient ayant perdu ses incisives inférieures temporaires et n'ayant pas encore ses incisives inférieures définitives, la longueur de ce canal est de l'ordre de 22 mm ± 2 mm.
- dans le cas d'un patient ayant ses incisives inférieures définitives, c'est-à-dire généralement à partir d'environ 6 ans ou plus, la longueur de ce canal est de l'ordre de 24 mm ± 1 mm.

7. Appareils correcteurs selon l'une des revendications précédentes **caractérisés en ce que** la partie du canal dentaire destinée à recevoir les incisives supérieures est délimitée latéralement par une portion légèrement arrondie de paroi vestibulaire et une portion plane de paroi palatine au niveau du canal dentaire.

8. Appareils correcteurs selon l'une des revendications précédentes **caractérisés en ce que** l'épaisseur de la cloison horizontale (3) est plus importante au niveau des incisives que celle de cette même cloison horizontale au niveau des autres dents.

9. Appareils correcteurs selon la revendication 8, **caractérisés en ce que** l'épaisseur de la cloison horizontale (3) au niveau des incisives varie entre 2 et 5 mm.

## Patentansprüche

1. Korrekturvorrichtungen für Kiefer-Gesichtsfunktions-Orthopädie-Behandlung und Parodontologie aus natürlichem Material oder Kunststoff, nachgiebig und Nahrungsmittel-verträglich, generell durch eine doppelte Schiene gebildet, wobei diese beiden Schienen äußerlich in horizontaler Ebene die Form eines sich verbreiternden U aufweisen und durch eine dicke, im Wesentlichen horizontale Zwischenwand getrennt sind, und die Innenfläche dieser beiden Schienen, definiert zwischen einerseits Seitenwänden, nämlich dem Außen- bzw. Vorhofwulst (1) und den Zungen- und Gaumenwulsten (2), und andererseits der dicken horizontalen Zwischenwand (3), glatt ist, und diese Korrekturvorrichtungen dabei **dadurch gekennzeichnet sind, dass**:
(a) der Teil der Schiene, der dazu bestimmt ist, die unteren Schneidezähne aufzunehmen, die Form eines geraden Kanals (4) hat, der an seinen beiden Enden jeweils in zwei Zahnkanäle mündet, die dazu bestimmt sind, jeweils einen unteren Eckzahn, zwei vordere untere Backenzähne oder die entsprechenden beiden vorderen unteren Milchbackenzähne eines Kindes aufzunehmen und, eventuell, wenigstens einen unteren Backenzahn;
(b) die Länge des geraden Kanals (4) ausreichend lang vorgesehen ist, um die vier unteren Schneidezähne aufnehmen zu können;
(c) die Tiefe des geraden Kanals (4) so vorgesehen ist, dass die vier unteren Schneidezähne vollständig eingeschlossen sind, wobei zu diesem Zweck die Hohe der Zungen- und Vorhof-Seitenwände (2) und (1), die den geraden Kanal (4) ab der dicken horizontalen Zwischenwand (3) begrenzen, wenigstens gleich der Höhe der Schneidezähne ist, bis zu ihrem Hals.

2. Korrekturvorrichtungen nach Anspruch 1, **dadurch gekennzeichnet, dass** sie aus einem Material auf der Basis von nachgiebigem Kautschuk bzw. Gummi sind.

3. Korrekturvorrichtungen nach Anspruch 2, **dadurch gekennzeichnet, dass** sie aus einem Material auf der Basis von nachgiebigem vulkanisiertem Kautschuk bzw. Gummi sind.

4. Korrekturvorrichtungen nach einem der Ansprüche 1 bis 3, **dadurch gekennzeichnet, dass** sie parfümiert bzw. aromatisiert sind wie Kaugummi.

5. Korrekturvorrichtungen nach einem der vorangehenden Ansprüche, **dadurch gekennzeichnet, dass** die Breite des Kanals (4), der die unteren Schneidezähne aufnimmt, in seinem oberen Teil im Wesentlichen der Dicke der unteren Schneidezähne entspricht, in sagittaler Richtung.

6. Korrekturvorrichtungen nach einem der vorangehenden Ansprüche, **dadurch gekennzeichnet, dass** die Länge des Kanals (4), der die unteren Schneidezähne aufnimmt, so ist:
- dass im Falle eines Patienten, der seine unteren Milchschneidezähnen hat, d.h. zwischen ungefähr 3 Jahren und 6 Jahren oder mehr, die Länge dieses Kanals in der Größenordnung von 20 mm ± 2 mm liegt;
- dass im Falle eines Patienten, der seine unteren Milchschneidezähne verloren hat und seine bleibenden unteren Schneidezähne noch nicht hat, die Länge dieses Kanals in der Größenordnung von 22 mm ± 2 mm liegt;
- dass im Falle eines Patienten der seine bleibenden unteren Schneidezähne hat, d.h. im Allgemeinen ab ungefähr 6 Jahren oder mehr, die Länge dieses Kanals in der Größenordnung von 24 mm ± 2 mm liegt.

7. Korrekturvorrichtungen nach einem der vorangehenden Ansprüche, **dadurch gekennzeichnet, dass** der Teil des Zahnkanals, der dazu bestimmt ist, die oberen Schneidezähne aufzunehmen, seitlich abgegrenzt wird durch einen leicht gerundeten Teil der Vorhof-Wand und einen ebenen Teil der Gaumen-Wand in Höhe des Zahnkanals.

8. Korrekturvorrichtungen nach einem der vorangehenden Ansprüche, **dadurch gekennzeichnet, dass** die Dicke der horizontalen Zwischenwand (3) in Höhe der Schneidezähne größer ist als die derselben horizontalen Zwischenwand in Höhe der anderen Zähne.

9. Korrekturvorrichtungen nach Anspruch 8, **dadurch gekennzeichnet, dass** die Dicke der horizontalen Zwischenwand (3) in Höhe der Schneidezähne zwischen 2 und 5 mm variiert.

## Claims

1. Corrective appliances for functional dento-facial orthopaedic treatment and periodontics, made of a natural or synthetic flexible and food-grade material, consisting, in general, of a double tray (or trough), these two trays externally, in a horizontal plane, adopting the shape of a flared U and being separated by a thick, slightly horizontal partition, the interior surface of these two trays, which are defined between, on the one hand, lateral walls, among which the vestibular strip (external) (1) and the lingual and palatine strips or rolls (2) (internal) and, on the other hand, the thick horizontal partition (3), being smooth, these corrective appliances being **characterized in that**:
(a) that part of the tray that is intended to receive the lower incisors is in the shape of a straight channel (4) which opens, at its two ends, into two tooth channels respectively, these being intended to receive respectively a lower canine, two lower premolars or the two corresponding milk-tooth molars of a child and, possibly, at least one lower molar;
(b) the length of the straight channel (4) is designed to be long enough for the four lower incisors to have enough space to fit in it,
(c) the depth of the straight channel (4) is designed to completely enclose the lower incisors and, for this purpose, the height of the lingual (2) and vestibular (1) side walls delimiting the straight channel (4) from the thick horizontal partition (3) is at least equal to the height of the incisors up to their neck.

2. Corrective appliances according to Claim 1, **characterized in that** they are based on flexible rubber.

3. Corrective appliances according to Claim 2, **characterized in that** they are based on vulcanized flexible rubber.

4. Corrective appliances according to one of Claims 1 to 3, **characterized in that** they are flavoured like chewing gums.

5. Corrective appliances according to one of the preceding claims, **characterized in that** the width of the channel (4) receiving the lower incisors, in its upper part, is designed to be slightly equal to the thickness of the lower incisors in the sagittal direction.

6. Corrective appliances according to one of the preceding claims, **characterized in that** the length of the tooth channel (4) intended to receive the lower incisors is such that:
- in the case of a patient who has his deciduous lower incisors, that is to say between about the age of 3 and up to about the age of 6 or above, the length of this channel is of the order of 20 mm ± 2 mm.
- in the case of a patient who has lost his deciduous lower incisors and has not yet got his permanent lower incisors, the length of this channel is of the order of 22 mm ± 2 mm.
- in the case of a patient who has got his permanent lower incisors, that is to say generally from about the age of 6 or above, the length of this channel is of the order of 24 mm ± 1 mm.

7. Corrective appliances according to one of the preceding claims, **characterized in that** that part of the tooth channel that is intended to receive the upper incisors is laterally delimited by a slightly rounded vestibular wall portion and a planar palatine wall portion in the region of the tooth channel.

8. Corrective appliances according to one of the preceding claims, **characterized in that** the thickness of the horizontal partition (3) is greater in the region of the incisors than the thickness of this same horizontal partition in the region of the other teeth.

9. Corrective appliances according to Claim 8, **characterized in that** the thickness of the horizontal partition (3) in the region of the incisors varies between 2 and 5 mm.
